# EUROPEAN PATENT APPLICATION

(11) **EP 4 350 057 A1**
(43) Date of publication of application: **10.04.2024**
(21) Application number: 22811130.8
(22) Date of filing: 28.04.2022
(51) Int. Cl.: D01F 1/10, C08L 77/00, C08L 101/00, B33Y 10/00, B33Y 80/00, B29C 64/106, B29C 64/118, B29C 64/314, B33Y 70/00

(54) **THERMOPLASTIC RESIN COMPOSITION, METHOD FOR PRODUCING SHAPED BODY, SHAPED BODY AND USE OF RESIN MATERIAL**

(30) Priority: 24.05.2021 JP 2021087074
(71) Applicant: ADEKA CORPORATION, Arakawa-ku Tokyo 116-8554 (JP)
(72) Inventor: NAKAMURA, Tatsuhito, Tokyo 116-8554 (JP)
(74) Representative: Forstmeyer, Dietmar
(86) International application number: PCT/JP2022/019351
(87) International publication number: WO 2022/249856

(57) **Abstract**

A thermoplastic resin composition for FDM additive manufacturing containing (A) 100 parts by mass of a thermoplastic resin, (B) 0.01 to 5 parts by mass of a primary antioxidant, and (C) 0.01 to 1.4 parts by mass of a secondary antioxidant. The thermoplastic resin (A) is a condensation thermoplastic resin. The primary antioxidant (B) is a phenol antioxidant having at least one structure represented by formula (1). The secondary antioxidant (C) is at least one of a phosphorus antioxidant represented by formula (2), (3), or (4) given in the description and a thioether antioxidant represented by formula (5) or (6) given in the description. 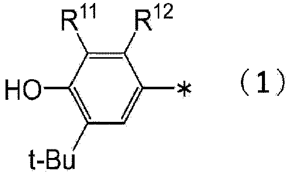 In formula (1), R¹¹ and R¹² each independently represent hydrogen or methyl; and * indicates a bond.

## Description

### Technical Field

The present invention relates to a thermoplastic resin composition for additive manufacturing by fused deposition modeling (FDM), a method for producing a three-dimensional (3D) object by FMD technology using the thermoplastic resin composition, and the use of a resin material in the production of filament materials for FDM additive manufacturing.

### Background Art

Additive manufacturing or 3D printing has recently been applied in various fields because of its advantages, such as the capability to manufacture resin products without using molds and the high degree of freedom in the shape of the manufactured products. In particular, an FDM-based additive manufacturing system is becoming popular not only for industrial use but also for home use due to relative inexpensiveness compared with other additive manufacturing systems. FDM is an additive manufacturing process in which a molten thermoplastic resin is extruded from a nozzle and built up layer by layer to create a 3D object.

ABS and polylactic acid have conventionally been the dominant thermoplastic resins used as FDM materials, but condensation thermoplastic resins, including polyamides, polycarbonates, and polyesters, are attracting attention due to their potential to improve processability and mechanical strength.

It is known that thermoplastic resins can undergo thermal or oxidative deterioration during processing or usage, resulting in reduction of mechanical characteristics, undesirable discoloration, and the like. Unlike injection and extrusion molding techniques, FDM additive manufacturing does not involve the use of a screw for kneading and plasticizing the FDM material. Therefore, a higher amount of heat is required in FDM to achieve material fluidization for efficient deposition, compared to injection molding and extrusion molding processes. In additive manufacturing using a resin with crystallizing properties, it is necessary to heat the inside of a build chamber in order to prevent shrinkage of the resin during build. This heat accelerates the material degradation and discoloration of the final 3D objects.
To address the above problem, use of an antioxidant has been proposed. For example, patent literature 1 below discloses a resin powder for solid freeform fabrication containing at least one antioxidant.

### Citation List

### Patent Literature

Patent literature 1: US 2018-355144 A1

### Summary of Invention

### Technical Problem

Patent literature 1 relates to selective laser sintering (SLS)that uses a laser to sinter a powdered material and has no mention of applying the resin powder to FDM. In addition, the inventor's investigation revealed that a 3D object produced by FDM using the material of patent literature 1 still has room for improvement in color tone stability and long-term thermal stability.

### Solution to Problem

As a result of further investigation, the inventor has found that a thermoplastic resin composition containing a primary antioxidant having a specific structure in its molecule combined with a secondary antioxidant is a resin material capable of creating a 3D object in FDM with excellent color tone stability and long-term thermal stability. The present invention has been completed based on this finding.

The present invention provides a thermoplastic resin composition for FDM additive manufacturing, including (A) 100 parts by mass of a thermoplastic resin, (B) 0.01 to 5 parts by mass of a primary antioxidant, and (C) 0.01 to 1.4 parts by mass of a secondary antioxidant. The thermoplastic resin (A) is a condensation thermoplastic resin. The primary antioxidant (B) is a phenol antioxidant having at least one structure represented by formula (1) below. The secondary antioxidant (C) is at least one of a phosphorus antioxidant represented by formula (2), (3), or (4) below and a thioether antioxidant represented by formula (5) or (6) below. 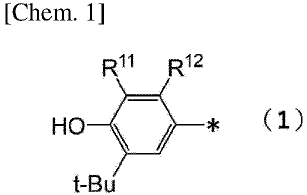 wherein R¹¹ and R¹² each independently represent a hydrogen atom or a methyl group; and * indicates a bond. 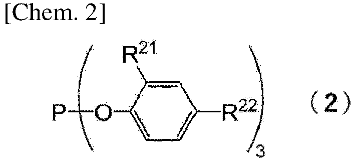 wherein R²¹ and R²² each independently represent an alkyl group with 1 to 8 carbon atoms. 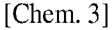 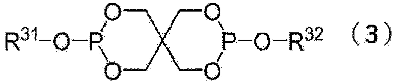 wherein R³¹ and R³² each independently represent an alkyl group with 1 to 40 carbon atoms or an aryl group with 6 to 40 carbon atoms. 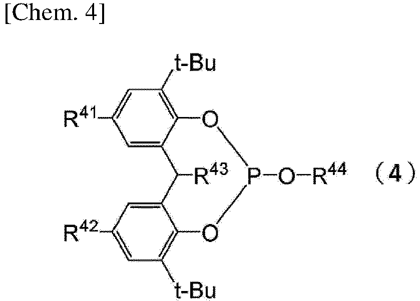 wherein R⁴¹, R⁴², and R⁴³ each independently represent a hydrogen atom or an alkyl group with 1 to 4 carbon atoms; and R⁴⁴ represents an alkyl group with 1 to 18 carbon atoms. 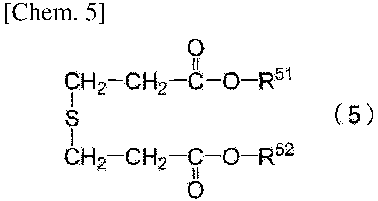 wherein R⁵¹ and R⁵² each independently represent an alkyl group with 8 to 22 carbon atoms. 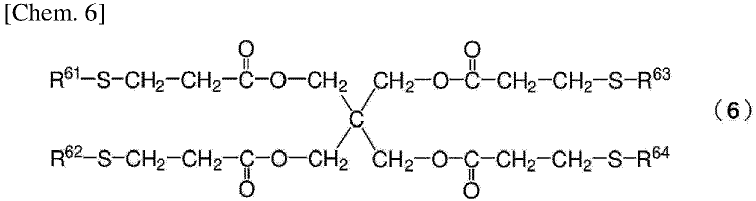 wherein R⁶¹, R⁶², R⁶³, and R⁶⁴ each independently represent an alkyl group with 8 to 22 carbon atoms.

The thermoplastic resin composition of the present invention preferably has a continuous filament form.

The thermoplastic resin composition of the present invention preferably has a continuous filament form with an average diameter of 1.55 to 1.95 mm.

The thermoplastic resin (A) of the thermoplastic resin composition of the present invention is preferably a polyamide resin.

The thermoplastic resin (A) of the thermoplastic resin composition of the present invention is preferably at least one of polyamide 6, polyamide 66, polyamide 11, and polyamide 12.

Component (B) of the thermoplastic resin composition of the present invention is preferably a phenol antioxidant having at least one structure represented by formula (7): 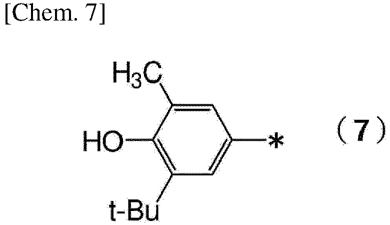 wherein * indicates a bond.

Component (B) of the thermoplastic resin composition of the present invention is preferably a phenol antioxidant having at least one structure represented by formula (8): 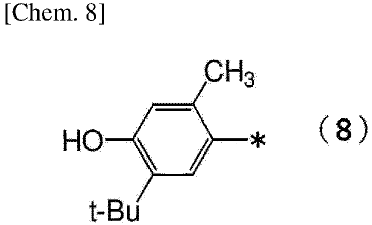 wherein * indicates a bond.

In formula (3), R³¹ and R³² each independently preferably represent an alkyl group with 1 to 40 carbon atoms.

The present invention also provides a method for producing a 3D object by FDM additive manufacturing using the above-described thermoplastic resin composition.

The present invention also provides a 3D object produced by the above-described method.

The present invention also provides the use of a resin material in the production of a filamentous material for additive manufacturing by FDM. The resin material contains (A) 100 parts by mass of a thermoplastic resin, (B) 0.01 to 5 parts by mass of a primary antioxidant, and (C) 0.01 to 1.4 parts by mass of a secondary antioxidant. The thermoplastic resin (A) is a condensation thermoplastic resin. The primary antioxidant (B) is a phenol antioxidant having at least one structure represented by formula (1). The secondary antioxidant (C) is at least one of a phosphorus antioxidant represented by formula (2), (3), or (4) and a thioether antioxidant represented by formula (5) or (6).

### Advantageous Effects of Invention

According to the present invention, there are provided a thermoplastic resin composition for FDM having excellent color tone stability and long-term thermal stability and a method for producing a 3D object by FDM using the thermoplastic resin composition.

### Description for Embodiments

The embodiments for carrying out the present invention will hereinafter be elaborated upon.

The thermoplastic resin composition of the present invention contains (A) a thermoplastic resin, (B) a primary antioxidant, and (C) a secondary antioxidant.

The term "fused deposition modeling" or "FDM" refers to one of additive manufacturing processes, in which a thermoplastic resin in the form of pellet or filament is melted in a forming chamber, extruded through a nozzle, deposited layer by layer, and solidified by cooling to create a 3D object.

The thermoplastic resin (A) is a condensation thermoplastic resin, which is obtained through polycondensation. Condensation thermoplastic resins are suitable as an FDM material due to their high strength and resistance to shrinkage.

The condensation thermoplastic resins include polyester resins, polyamide resins, and polycarbonate resins. The condensation thermoplastic resins can be elastomers, such as polyester thermoplastic elastomers, polyamide thermoplastic elastomers, and polyurethane thermoplastic elastomers. These condensation thermoplastic resins may be used either individually or in combination of two or more thereof. The condensation thermoplastic resins can be alloyed.

Examples of the polyester resins include polyalkylene terephthalates, such as polyethylene terephthalate, polybutylene terephthalate, polytetramethylene terephthalate, and polycyclohexylene dimethylene terephthalate; polyalkylene naphthalates, sch as polyethylene naphthalate and polybutylene naphthalate; and degradable aliphatic polyesters, such as polyhydroxybutyrate, polycaprolactone, polybutylene succinate, polyethylene succinate, polylactic acid, polymalic acid, polyglycolic acid, polydioxanon, and poly(2-oxetanone).

Examples of the polyamide resins include aliphatic polyamides, such as polyamide 410, polyamide 6, polyamide 66, polyamide 666, polyamide 610, polyamide 612, polyamide 11, and polyamide 12; and semi-aromatic polyamides, such as polyamide 4T, polyamide 6T, polyamide 9T, and polyamide 10T.

The polycarbonate resin is a resin having a carbonate bond which is obtained by, for example, the polymerization reaction between a dihydroxy aromatic compound and a carbonate precursor.

Examples of the dihydroxy aromatic compound include dihydroxybenzenes, such as resorcin and hydroquinone; bishydroxyaryls, such as 4,4'-dihydroxydiphenyl; bis(hydroxyaryl)alkanes, such as bis(4-hydroxyphenyl)methane, 1,1-bis(4-hydroxyphenyl)ethane, 1,2-bis(4-hydroxyphenoxy)ethane, and 2,2-bis(4-hydroxyphenyl)propane; dihydroxyarylketones, such as bis(4-hydroxyphenyl) ketone and bis(4-hydroxy-3-methylphenyl) ketone; dihydroxyaryl ethers, such as 4,4'-dihydroxydiphenyl ether, 4,4'-dihydroxy-3,3'-dimethyldiphenyl ether, and 4,4'-dihydroxy-2,5-dihydroxydiphenyl ether; dihydroxyaryl sulfur compounds, such as 4,4'-thiodiphenol, bis(4-hydroxyphenyl) sulfide, 4,4'-dihydroxy-3,3'-dimethyldiphenyl sulfide, 4,4'-dihydroxy-3,3'-dimethyldiphenyl sulfoxide, 2,2-bis(4-hydroxyphenyl) sulfone, 4,4'-dihydroxydiphenyl sulfone, and 4,4'-dihydroxy-3,3'-dimethyldiphenyl sulfone; and phenolphthalein. These dihydroxy aromatic compounds may be used either individually or in combination thereof. They may be used in combination with a polyhydroxy aromatic compound having three or more hydroxy groups.

Examples of suitable carbonate precursors include phosgene, carbonic diesters, diphenyl carbonate, dihydric phenol dihaloformates, and mixtures thereof.

The above-recited condensation thermoplastic resins can be used irrespective of molecular weight, degree of polymerization, density, softening point, solvent-insoluble content, degree of stereoregularity, presence or absence of catalyst residue, type and copolymerization ratio of monomers, type of catalyst for polymerization, and so forth.

Among these condensation thermoplastic resins preferred are polyamides in terms of versatility, color tone stability, and long-term thermal stability. *Inter alia,* aliphatic polyamides are more preferred for their relatively low melting temperatures, which facilitate FDM at low temperatures. At least one of polyamide 6, polyamide 66, polyamide 11, and polyamide 12 is even more preferred, with at least one of polyamide 11 and polyamide 12 being particularly preferred. In using an aliphatic polyamide combined with another thermoplastic resin, it is preferred that the proportion of the aliphatic polyamide in the total thermoplastic resin be at least 50 mass% (or more than 50 mass%). Whether or not the thermoplastic resin composition of the present invention contains a polyhydric alcohol, for example, the content of the aliphatic polyamide is preferably more than 100 parts by mass per 100 parts by mass of the sum of a polyhydric alcohol and a semi-aromatic polyamide.

In view of suitability to the use intended in the present invention, the thermoplastic resin content of the thermoplastic resin composition is preferably 40 mass% or higher, more preferably 50 mass% or higher, even more preferably 60 mass% or higher, and may be 70 mass% or even higher. As long as there is room for components (B) and (C), the upper limit of the thermoplastic resin content is not particularly limited but would preferably be 99.9 mass%.

The primary antioxidant (B) and the secondary antioxidant (C) will next be explained. A primary antioxidant generally scavenges radicals to prevent autoxidation. A secondary antioxidant generally decomposes a hydroperoxide to make it harmless. Component (C) used in the present invention does not have the structure of formula (1). Throughout the description, the number of the carbon atoms within a specific group determines the total count of carbon atoms making up the entire assembly. This encompassing count includes any substituents, each of which replaces a hydrogen atom within the group. For instance, in characterizing an alkyl group with 1 to 20 carbon atoms as being subject to substitution, this signifies that the substituted alkyl group should have 1 to 20 carbon atoms. This does not infer that the alkyl group in its unsubstituted form has 1 to 20 carbon atoms. In the content of describing a specific group having a methylene moiety, when indicating optional replacement of the methylene moiety with another divalent group, it should be noted that multiple instances of these divalent groups, whether identical or different from each other, are not positioned adjacently.

The primary antioxidant (B) is a phenol antioxidant having at least one structure of formula (1): 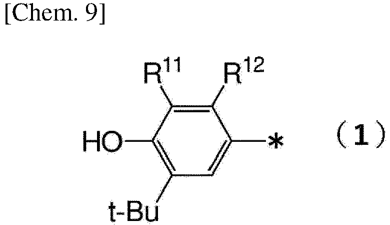 wherein R¹¹ and R¹² each independently represent a hydrogen atom or a methyl group; and * indicates a bond.

In the structure of formula (1), at least one of R¹¹ and R¹² is preferably methyl in terms of color tone stability and long-term thermal stability. It is more preferred for either one of R¹¹ and R¹² to be methyl, and for the other to be hydrogen.

The phenol antioxidant having the structure of formula (1) is exemplified by a compound represented by formula (A-1): 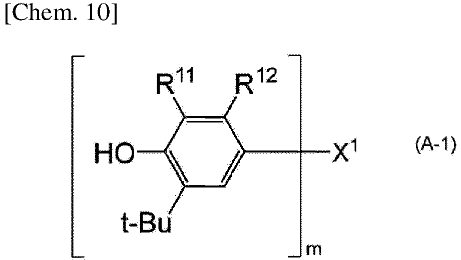 wherein R¹¹ and R¹² are as defined above; m represents an integer of 1 to 10; and X¹ represents an m-valent linking group.

The number of the structures of formula (1) per molecule of component (B) is preferably 1 to 10. For ease of synthesis, that number is preferably 1 to 6, more preferably 1 to 5, even more preferably 1 to 4. Similarly, the symbol m in formula (A-1), defined to be an integer of from 1 to 10, is preferably 1 to 6, more preferably 1 to 5, even more preferably 1 to 4, for ease of synthesis.

The compound of formula (A-1) is composed of a specific m-valent atom (X¹) having m specific groups bonded thereto. The m specific groups may be the same or different from each other.

X¹ in formula (A-1) is an m-valent linking group. Specifically, the linking group X¹ is a direct bond, a hydrogen atom, a nitrogen atom, a sulfur atom, a carbon atom, an oxygen atom, a phosphorus atom, a group represented by formula (II-a) below, - (C=O)-, -N(R⁵³)-, -OR⁵³, -SR⁵³, -NR⁵³R⁵⁴, a hydrocarbon group having 1 to 120 carbon atoms and the same number of valence sites as m, or a heterocyclic ring-containing group having 2 to 35 carbon atoms and the same number of valence sites as m. R⁵³ and R⁵⁴ each represent a hydrogen atom, a hydrocarbon group having 1 to 35 carbon atoms, or a heterocyclic ring-containing group with 2 to 35 carbon atoms. The methylene moiety of the above-recited hydrocarbon groups and heterocyclic ring-containing groups may optionally be replaced with -O-, -CO-, -O-CO-, -CO-O-, -O-CO-O-, -O-CO-O-, -S-CO-, -CO-S-, -S-CO-O-, -O-CO-S-, -CO-NR⁵⁸-, -NR⁵⁸-CO-, -NR⁵⁸-CO-O-,-NR⁵⁸-CO-O-, -NR⁵⁸-, -S-S-, -SO₂-, -S-O-, -P(R⁵⁸)-, or a combination thereof, and the above-described aromatic or heterocyclic ring may be fused with another ring. R⁵⁸ represents a hydrogen atom, a hydrocarbon group with 1 to 35 carbon atoms, or a heterocyclic ring-containing group with 2 to 35 carbon atoms.

When X¹ is a carbon atom, m is 4. When X¹ is a nitrogen atom, a phosphorus atom, or a linking group of formula (II-a) below, m is 3. When X¹ is a direct bond, an oxygen atom, a sulfur atom, -(C=O)-, -NH-CO-, -CO-NH-, or -N(R⁵³)-, m is 2. When X¹ is hydrogen, -OR⁵³, -SR⁵³ or -NR⁵³R⁵⁴, m is 1. X¹ may be taken together with the benzene ring to form a ring. 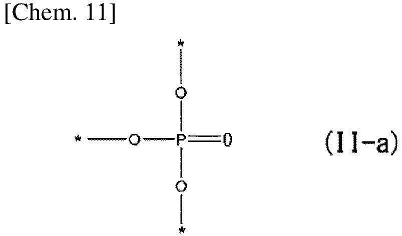 wherein * indicates the position at which a neighboring moiety is bonded.

The hydrocarbon group with 1 to 120 carbon atoms and the same number of valence sites as m, which is represented by X¹, includes aliphatic hydrocarbon groups with 1 to 120 carbon atoms and aromatic ring-containing hydrocarbon groups with 6 to 35 carbon atoms.

Among the C1-120 aliphatic hydrocarbon groups having the same number of valence sites as m, those having one valence site (m = 1) include alkyl groups, such as methyl, ethyl, propyl, isopropyl, cyclopropyl, butyl, sec-butyl, tert-butyl, isobutyl, amyl, isoamyl, tert-amyl, cyclopentyl, hexyl, 2-hexyl, 3-hexyl, cyclohexyl, bicyclohexyl, 1-methylcyclohexyl, heptyl, 2-heptyl, 3-heptyl, isoheptyl, tert-heptyl, n-octyl, isooctyl, tert-octyl, 2-ethylhexyl, nonyl, isononyl, and decyl; alkenyl groups, such as vinyl, 1-methylethenyl, 2-methylethenyl, 2-propenyl, 1-methyl-3-propenyl, 3-butenyl, 1-methyl-3-butenyl, isobutenyl, 3-pentenyl, 4-hexenyl, cyclohexenyl, bicyclohexenyl, heptenyl, octenyl, decenyl, pentadecenyl, eicosenyl, and tricosenyl; the alkyl and alkenyl groups being optionally substituted with the substituent(s) described below.

These aliphatic hydrocarbon groups of which the methylene moiety is replaced with -O- include alkoxy groups, such as methoxy, ethoxy, propoxy, isopropoxy, butoxy, sec-butoxy, tert-butoxy, isobutoxy, amyloxy, isoamyloxy, tert-amyloxy, hexyloxy, cyclohexyloxy, heptyloxy, isoheptyloxy, tert-heptyloxy, n-octyloxy, isooctyloxy, tert-octyloxy, 2-ethylhexyloxy, nonyloxy, and decyloxy.

Among the C1-120 aliphatic hydrocarbon groups having the same number of valence sites as m, those having two valence sites (m = 2) include the above-recited C1-120 monovalent aliphatic hydrocarbon groups from which one hydrogen atom has been removed, such as alkylene groups, e.g., methylene, ethylene, propylene, butylene, and butyldiyl; the alkylene groups recited of which a methylene chain has been replaced with -O-, -CO-O-, or -O-CO-; residual groups of diols, e.g., ethanediol, propanediol, butanediol, pentanediol, and hexanediol, these divalent group being optionally substituted with the substituents described below.

Among the C1-120 aliphatic hydrocarbon groups having the same number of valence sites as m, those having three valence sites (m = 3) include the above-recited C1-120 monovalent aliphatic hydrocarbon groups from which two hydrogen atoms have been removed, such as alkylidynes, e.g., propylidyne and 1,1,3-butylidyne. These trivalent groups may be substituted with the substituents described below.

Among the C1-120 aliphatic hydrocarbon groups having the same number of valence sites as m, those having four valence sites (m = 4) include the above-recited C1-120 monovalent aliphatic hydrocarbon groups from which three hydrogen atoms have been removed and which may be substituted with the substituents described below.

Among the C6-35 aromatic ring-containing hydrocarbon groups having the same number of valence sites as m, those having one valence site (m = 1) include arylalkyl groups, such as benzyl, phenethyl, diphenylmethyl, triphenylmethyl, styryl, and cinnamyl; aryl groups, such as phenyl, methylphenyl, ethylphenyl, and naphthyl; and aryloxy groups, such as phenoxy, methylphenoxy, and naphthyloxy, these monovalent groups being optionally substituted with the substituents described below.

Among the C6-35 aromatic ring-containing hydrocarbon groups having the same number of valence sites as m, those having two valence sites (m = 2) include the above-recited C6-35 monovalent aromatic ring-containing hydrocarbon groups from which one hydrogen atom has been removed, such as arylene groups, e.g., phenylene, naphthylene, and methylphenylene; and residual groups of bifunctional phenol groups, e.g., catechol and bisphenol, these divalent aromatic ring-containing hydrocarbon groups being optionally substituted with the substituents described below.

Among the C6-35 aromatic ring-containing hydrocarbon groups having the same number of valence sites as m, those having three valence sites (m = 3) include the above-recited C6-35 monovalent aromatic ring-containing hydrocarbon groups from which two hydrogen atoms have been removed, such as phenyl-1,3,5-trimethylene. These trivalent groups may be substituted with the substituents described below.

Among the C6-35 aromatic ring-containing hydrocarbon groups having the same number of valence sites as m, those having four valence sites (m = 4) include the above-recited C6-35 monovalent aromatic ring-containing hydrocarbon groups from which three hydrogen atoms have been removed. These tetravalent groups may be substituted with the substituents described below.

The C2-35 heterocyclic ring-containing group having the same number of valence sites as m, which is represented by X¹, includes those having one valence site (m = 1), including heterocyclic groups, such as pyridyl, pyrimidyl, pyridazyl, piperidyl, pyranyl, pyrazolyl, triazyl, pyrrolyl, quinolyl, isoquinolyl, imidazolyl, benzimidazolyl, triazolyl, furyl, furanyl, benzofuranyl, thienyl, thiophenyl, benzothiophenyl, thiadiazolyl, thiazolyl, benzothiazolyl, oxazolyl, benzoxazolyl, isothiazolyl, isoxazolyl, indolyl, 2-pyrrolidinon-1-yl, 2-piperidon-1-yl, 2,4-dioxyimidazolidin-3-yl, 2,4-dioxyoxazolidin-3-yl, benzotriazoyl, and 2,4,8,10-tetraoxaspiro[5,5]undecane; and monovalent groups formed by the bonding of the above-recited heterocyclic group and a hydrocarbon group. These heterocyclic ring-containing groups may be substituted with the substituents described below. The hydrocarbon group of the monovalent groups formed by the bonding of the heterocyclic group and a hydrocarbon group includes the aforementioned C1-120 hydrocarbon groups which meet the limitation of carbon number. The free bonding site of the group formed by the bonding of the heterocyclic group and the hydrocarbon group may be on either the heterocyclic moiety or the hydrocarbon moiety.

The C2-35 heterocyclic ring-containing group having the same number of valence sites as m includes those having two valence sites (m = 2), including the above-recited C2-35 monovalent heterocyclic ring-containing groups from which one hydrogen atom has been removed, such as divalent groups having a pyridine, pyrimidine, piperidine, piperazine, triazine, furan, thiophene, indole, or 2,4,8,10-tetraoxaspiro[5,5]undecane ring. These divalent groups may be substituted with the substituents described below.

Among the C1-35 hydrocarbon groups as R⁵³, R⁵⁴, and R⁵⁸, aliphatic ones include those having 1 to 35 carbon atoms out of the C1-120 aliphatic hydrocarbon groups recited above as X¹ and the C1-120 aliphatic hydrocarbon groups substituted with the substituent described below. Preferred are those with 1 to 20 carbon atoms. Among the C6-35 hydrocarbon groups as R⁵³, R⁵⁴, and R⁵⁸, aromatic ones include the C6-35 aromatic ring-containing hydrocarbon groups recited above as X¹ and the C6-35 aromatic ring-containing hydrocarbon groups substituted with the substituent described below. Preferred are those with 6 to 20 carbon atoms.

The C2-35 heterocyclic ring-containing group as R⁵³, R⁵⁴, and R⁵⁸ includes those recited above for X¹ which may be substituted by the substituents described below. Preferred are those with 2 to 30 carbon atoms.

As stated earlier, the aforementioned aliphatic hydrocarbon groups, aromatic ring-containing hydrocarbon groups, and heterocyclic ring-containing groups having the same number of valence sites as m may have a substituent. Accordingly, it is to be understood that the compound having the group of formula (1) as component (B) includes both substituted and unsubstituted compounds unless otherwise specified.

Examples of the substituent referred to above include ethylenically unsaturated groups, such as vinyl, allyl, acryl, and methacryl; halogen atoms, such as fluorine, chlorine, bromine, and iodine; acyl groups, such as acetyl, 2-chloroacetyl, propionyl, octanoyl, acryloyl, methacryloyl, phenylcarbonyl (or benzoyl), phthaloyl, 4-trifluoromethylbenzoyl, pivaloyl, salicyloyl, oxaloyl, stearoyl, methoxycarbonyl, ethoxycarbonyl, t-butoxycarbonyl, n-octadecyloxycarbonyl, and carbamoyl; acyloxy groups, such as acetyloxy and benzoyloxy; amino; substituted amino groups, such as ethylamino, dimethylamino, diethylmino, butylamino, cyclopentylamino, 2-ethylhexylamino, dodecylamino, anilino, chlorophenylamino, toluidino, anisidino, N-methylanilino, diphenylamino, naphthylamino, 2-pyridylamino, methoxycarbonylamino, phenoxycarbonylamino, acetylamino, benzoylamino, formylamino, pivaloylamino, lauroylamino, carbamoylamino, N,N-dimethylaminocarbonylamino, N,N-diethylaminocarbonylamino, morpholinocarbonylamino, methoxycarbonylamino, ethoxycarbonylamino, t-butoxycarbonylamino, n-octadecyloxycarbonylamino, N-methylmethoxycarbonylamino, phenoxycarbonylamino, sulfamoylamino, N,N-dimethylaminosulfonylamino, methylsulfonylamino, butylsulfonylamino, and phenylsulfonylamino; sulfonamido, sulfonyl, carboxy, cyano, sulfo, hydroxy, nitro, mercapto, imido, carbamoyl, sulfonamido; a phosphonic acid group, a phosphoric acid group, a carboxylate group, a sulfonate group, a phosphonate group, and a phosphate group.

When m is 1 to 4, the linking group X¹ is preferably represented by formula (1A): 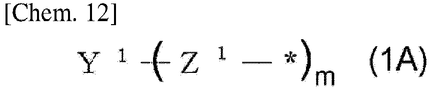 wherein m is a number of 1 to 4; Y¹ is a direct bond, hydrogen, nitrogen, sulfur, carbon, oxygen, phosphorus, a group of formula (II-a), -(C=O)-, -N(R⁵³)-, -OR⁵³, -SR⁵³, -NR⁵³R⁵⁴, a hydrocarbon group with 1 to 35 carbon atoms, or a heterocyclic ring-containing group having 2 to 35 carbon atoms, the methylene moiety of the C1-35 hydrocarbon group and C2-35 heterocyclic ring-containing group being optionally replaced with -O-, -CO-, -O-CO-, -CO-O-, -O-CO-O-, -O-CO-O-, -S-CO-, -CO-S-, -S-CO-O-, -O-CO-S-, -CO-NR⁵⁸-, -NR⁵⁸-CO-, -NR⁵⁸-CO-O-,-NR⁵⁸-CO-O-, -NR⁵⁸-, -S-S-, -SO₂-, -S-O-, -P(R⁵⁸)-; Z¹ is a direct bond, -O-, -CO-, -O-CO-, -CO-O-, -O-CO-O-, -O-CO-O-, -S-CO-, -CO-S-, -S-CO-O-, -O-CO-S-, -CO-NR⁵⁸-, -NR⁵⁸-CO-, -NR⁵⁸-CO-O-,-NR⁵⁸-CO-O-, -NR⁵⁸-, -S-S-, -SO₂-, -S-O-, -P(R⁵⁸)-, a C1-20 hydrocarbon group, or a combination thereof; R⁵³, R⁵⁴, and R⁵⁸ are each a hydrogen atom, a C1-35 hydrocarbon group, or a C2-35 heterocyclic ring-containing group;
when there two or more Z¹'s, they may be the same or different. When there are two or more R⁵³'s, ⁵⁴'s, or R⁵⁸'s, they may be the same or different;
when Y¹ is carbon, m is 4; when Y¹ is nitrogen, phosphorus, or a linking group of formula (II-a), m is 3; when Y¹ is a direct bond, oxygen, sulfur, >C=O, -NH-CO-, -CO-NH-, or -N(R⁵³)-, m is 2; when Y¹ is hydrogen, -OR⁵³, -SR⁵³, or -NR⁵³R⁵⁴, m is 1; and * indicates the position at which a neighboring group is attached.

The C1-35 hydrocarbon group as Y¹ in formula (1A) includes aliphatic ones, including the C1-120 aliphatic hydrocarbon groups described above which have the same number of valence sites as m and meet the carbon number limitation. These aliphatic groups preferably have 1 to 20 carbon atoms. The methylene moiety of the aliphatic hydrocarbon groups may be replaced with -O-, -CO-, -O-CO-, -CO-O-, -O-CO-O-, -O-CO-O-, -S-CO-, -CO-S-, -S-CO-O-, -O-CO-S-, -CO-NR⁵⁸- , -NR⁵⁸-CO-, -NR⁵⁸-CO-O-,-NR⁵⁸-CO-O-, -NR⁵⁸-, -S-S-, -SO₂-, -S-O-, -P(R⁵⁸)-, or a combination thereof.

The divalent hydrocarbon group as Y¹ in formula (1A) includes C6-35 aromatic ring-containing hydrocarbon groups, including those described above as having the same number of valence sites as m, preferably those having 6 to 20 carbon atoms. The methylene moiety of these aromatic ring-containing hydrocarbon groups may be replaced with -O-, -CO-, -O-CO-, -CO-O-, -O-CO-O-, -O-CO-O-, -S-CO-, -CO-S-, -S-CO-O-, -O-CO-S-, -CO-NR⁵⁸-, -NR⁵⁸-CO-, -NR⁵⁸-CO-O-,-NR⁵⁸-CO-O-, -NR⁵⁸-, -S-S-, -SO₂-, -S-O-, -P(R⁵⁸)-, or a combination thereof.

The divalent C2-35 heterocyclic ring-containing group as Y¹ in formula (1A) include those described above as having the same number of valence site as m, preferably those having 6 to 20 carbon atoms. The methylene moiety of these hydrocarbon groups may be replaced with -O-, -CO-, -O-CO-, -CO-O-, -O-CO-O-, -O-CO-O-, -S-CO-, -CO-S-, -S-CO-O-, -O-CO-S-, -CO-NR⁵⁸-, -NR⁵⁸-CO-, -NR⁵⁸-CO-O-, -NR⁵⁸-CO-O-, -NR⁵⁸-, -S-S-, -SO₂-, -S-O-, -P(R⁵⁸)-, or a combination thereof.

The C1-20 hydrocarbon group as Z¹ in formula (1A) includes C1-20, preferably C1-8 alkylene groups.

The above-mentioned aliphatic hydrocarbon groups, aromatic ring-containing hydrocarbon groups, and heterocyclic ring-containing groups may each have a substituent. Accordingly, it is to be understood that they include both substituted and unsubstituted groups unless otherwise specified.

The substituent of the aliphatic hydrocarbon groups, aromatic ring-containing hydrocarbon groups, and heterocyclic ring-containing groups includes those enumerated above with respect to the aliphatic hydrocarbon groups, aromatic ring-containing hydrocarbon groups, and heterocyclic ring-containing groups having the same number of valence sites as m.

The linking group X¹ is preferably an aliphatic hydrocarbon group with 1 to 20 carbon atoms or a substituent group represented by formula (1-4) below in terms of ease of preparation of the compound. When, for example, m is 2, X¹ is preferably a C1-20 aliphatic hydrocarbon group or the substituent group of formula (1-4). When m is 3, the linking group X¹ is preferably a C1-20 aliphatic hydrocarbon group. 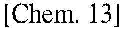 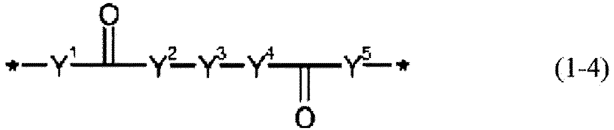 wherein Y¹ and Y⁵ each independently represent a C1-4 alkylene group; Y² and Y⁴ each independently represent oxygen or -NR¹¹³-; R¹¹³ represents hydrogen or a C1-20 aliphatic hydrocarbon group; Y³ represents -CR¹¹⁴R¹¹⁵-, -NR¹¹⁶-, a divalent C1-35 aliphatic hydrocarbon group, a divalent C6-35 aromatic ring-containing hydrocarbon group, a divalent C6-35 heterocyclic ring-containing group, or a substituent represented by formula (1-7); the methylene moiety of the aliphatic, aromatic, and heterocyclic ring-containing groups is optionally replaced with -COO-, -O-, -OCO-, -NHCO-, -NH-, or -CONH; R¹¹⁴ and R¹¹⁵ each independently represent hydrogen, C1-8 alkyl, C6-20 aryl, or C7-20 arylalkyl; R¹¹⁶ represents hydrogen, a C1-35 aliphatic hydrocarbon group, a C6-35 aromatic ring-containing hydrocarbon group, or a C2-35 heterocyclic ring-containing group; and * represents a bond; provided that when Y² or Y⁴ is -NR¹¹³-, Y³ is not -NR¹¹⁶-.

Of the linking groups X¹ of formula (1-4), those in which Y² and Y⁴ are each oxygen are especially preferred in terms of bloom resistance, ease of preparation, and availability of raw materials.

Of the linking groups X¹ of formula (1-4), more preferred are those in which Y³ is a divalent C1-35, even more preferably C3-20, aliphatic hydrocarbon group, of which one or more methylene moieties may each be replaced with -O-, or a substituent represented by formula (1-7) shown below from the standpoint of bloom resistance, ease of preparation, and availability of raw materials. From the above standpoint, Y³ is more preferably a divalent C3-20 aliphatic hydrocarbon group of which one or more methylene moieties are each replaced with -O- or the substituent of formula (1-7), even more preferably a C4-8 (preferably C4-6) group in which ethylene or propylene alternates with oxygen or the substituent of formula (1-7), most preferably the substituent of formula (1-7). The C1-35 (particularly preferably C3-20) aliphatic hydrocarbon group the methylene moiety of which is replaced with -O- as referred to above may be either linear or cyclic. 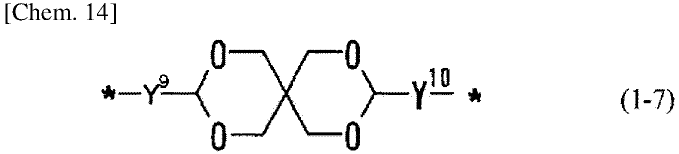 wherein Y⁹ and Y¹⁰ each independently represent a C1-8 alkylene group; and * indicates a bond.

The alkylene group as represented by Y¹, Y⁵, Y⁹, and Y¹⁰ in formulae (1-4) and (1-7) includes methylene, ethylene, propylidene, isopropylidene, and butylidene. The alkylene groups as Y⁹ and Y¹⁰ each independently preferably have 1 to 4 carbon atoms.

The C1-20 aliphatic hydrocarbon group as R¹¹³ includes the C1-120 aliphatic hydrocarbon groups recited above as X¹ which are monovalent (m = 1) and meet the specified carbon number limitation.

The divalent C1-35 aliphatic hydrocarbon group and C6-35 aromatic ring-containing hydrocarbon group as Y³ include those recited above as X¹ and meeting the specified carbon number limitation.

Examples of the C1-8 alkyl group as R¹¹⁴ and R¹¹⁵ include methyl, ethyl, propyl, isopropyl, butyl, sec-butyl, tert-butyl, isobutyl, amyl, isoamyl, tert-amyl, hexyl, 2-hexyl, 3-hexyl, cyclohexyl, 4-methylcyclohexyl, heptyl, 2-heptyl, 3-heptyl, isoheptyl, tert-heptyl, 1-octyl, isooctyl, and tert-octyl.

The C6-20 aryl group as R¹¹⁴ and R¹¹⁵ includes those recited below as the aryl group represented by R³¹ and R³² in formula (3) and meeting the specified carbon number limitation. The C7-20 arylakyl group as R¹¹⁴ and R¹¹⁵ includes benzyl, phenethyl, 2-phenylpropan-2-yl, diphenylmethyl, triphenylmethyl, styryl, and cinnamyl.

The C1-35 aliphatic hydrocarbon group, C6-35 aromatic ring-containing hydrocarbon group, and the C2-35 heterocyclic ring-containing group as R¹¹⁶ include those illustrated above as R⁵³ and R⁵⁴.

Each of the aforementioned aliphatic hydrocarbon groups, aromatic ring-containing hydrocarbon groups, and heterocyclic ring-containing groups may be substituted with a substituent. Accordingly, it is to be understood that the above-described groups include both substituted and unsubstituted ones unless otherwise specified.

Examples of the substituents for the aliphatic hydrocarbon groups, aromatic ring-containing hydrocarbon groups, and heterocyclic ring-containing groups include those recited above for the substituted aliphatic and aromatic ring-containing hydrocarbon groups and substituted heterocyclic ring-containing groups represented by X¹ and having the same number of valence sites as m.

As previously discussed, when m is 2 or 3, and the linking group X¹ is a C1-20 aliphatic hydrocarbon group, X¹ is preferably a C1-10 aliphatic hydrocarbon group, more preferably a C1-6 aliphatic hydrocarbon group, in terms of easier synthesis of the compound.

The primary antioxidant (B) is preferably a phenol antioxidant having at least one structure represented by formula (7) shown below in terms of color tone stability and long-term thermal stability. In this case, it is more preferred that the group represented by formula (1) be represented by formula (7). 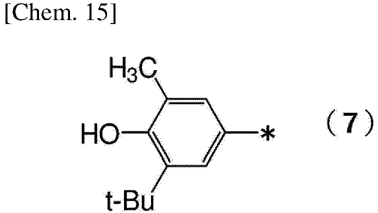 wherein * indicates a bond.

It is also preferred for the primary antioxidant (B), which is a phenol antioxidant, to have at least one structure represented by formula (8) shown below in terms of color tone stability and long-term thermal stability. In this case, it is more preferred that the group represented by formula (1) be represented by formula (8). 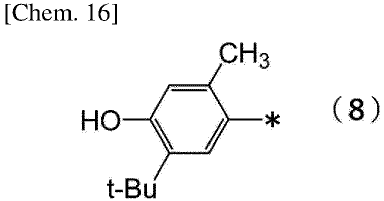 wherein * indicates a bond.

Specific examples of the primary antioxidant (B) include 2,2'-methylenebis(4-methyl-6-tert-butylphenol), 4,4'-thiobis(6-tert-butyl-m-cresol), 1,1,3-tris(2-methyl-4-hydroxy-5-tert-butylphenyl)butane, 4,4'-butylidenebis(6-tert-butyl-m-cresol), 3,9-bis[2-{3-(3-tert-butyl-4-hydroxy-5-methylphenyl)propionyloxy}-1,1-dimethylethyl]-2, 4,8,10-tetraoxaspiro[5,5]undecane, and triethylene glycol bis[(3-tert-butyl-4-hydroxy-5-methylphenyl)propionate]. Preferred among them are 1,1,3-tris(2-methyl-4-hydroxy-5-tert-butylphenyl)butane, 4,4'-butylidenebis(6-tert-butyl-m-cresol), 3,9-bis[2-{3-(3-tert-butyl-4-hydroxy-5-methylphenyl)propionyloxy}-1,1-dimethylethyl]-2, 4,8,10-tetraoxaspiro[5,5]undecane, and triethylene glycol bis[(3-tert-butyl-4-hydroxy-5-methylphenyl)propionate]. More preferred is 3,9-bis[2-{3-(3-tert-butyl-4-hydroxy-5-methylphenyl)propionyloxy}-1,1-dimethylethyl]-2, 4,8,10-tetraoxaspiro[5,5]undecane.

The primary antioxidant (B) may include one or more phenol antioxidants.

The primary antioxidant (B) is used in an amount of 0.01 to 5 parts, preferably 0.03 to 3 parts, more preferably 0.05 to 2 parts, even more preferably 0.05 to 1.5 parts, by mass per 100 parts by mass of the thermoplastic resin (A). A quantity of 0.01 parts or more of the primary antioxidant (B) allows for substantial improvement in color tone stability and long-term thermal stability. By limiting the primary antioxidant (B) to a maximum of 5 parts, it is possible to mitigate the issues, such as poor molding, defects in the appearance of 3D objects, and blooming.

The secondary antioxidant (C) is at least one of a phosphorus antioxidant represented by any one of the formulae (2), (3), and (4) below and a thioether antioxidant represented by either formula (5) or (6) below. 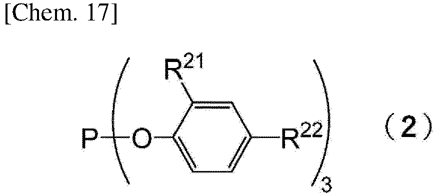 wherein R²¹ and R²² each independently represent an alkyl group with 1 to 8 carbon atoms. 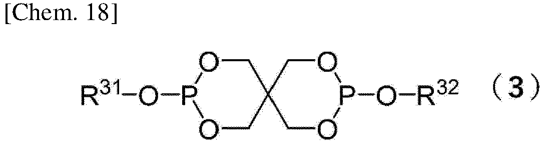 wherein R³¹ and R³² each independently represent an alkyl group with 1 to 40 carbon atoms or an aryl group with 6 to 40 carbon atoms. 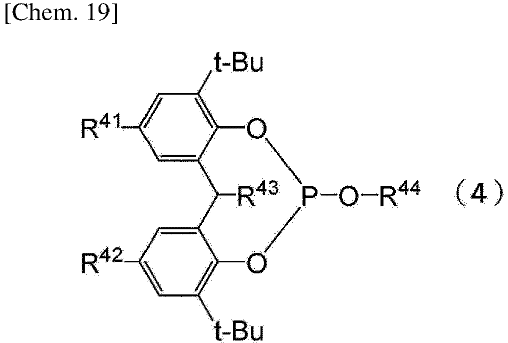 wherein R⁴¹, R⁴², and R⁴³ each independently represent a hydrogen atom or an alkyl group with 1 to 4 carbon atoms; and R⁴⁴ represents an alkyl group with 1 to 18 carbon atoms. 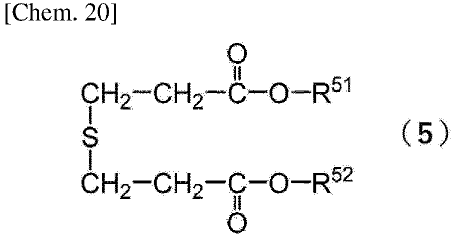 wherein R⁵¹ and R⁵² each independently represent an alkyl group with 8 to 22 carbon atoms. 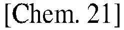 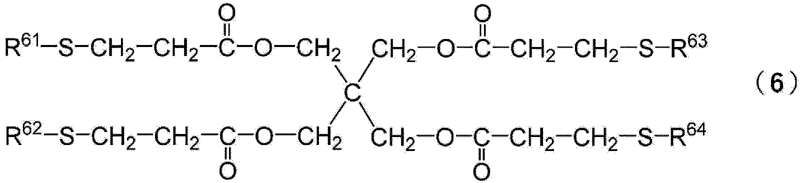 wherein R⁶¹, R⁶², R⁶³, and R⁶⁴ each independently represent an alkyl group with 8 to 22 carbon atoms.

Examples of the C1-8 alkyl group as R²¹ and R²² in formula (2) include methyl, ethyl, propyl, isopropyl, butyl, isobutyl, sec-butyl, tert-butyl, pentyl, isopentyl, tert-pentyl, hexyl, cyclohexyl, heptyl, isoheptyl, tert-heptyl, n-octyl, isooctyl, tert-octyl, and 2-ethylhexyl. R²¹ and R²² are each preferably a C1-4 alkyl group, with tert-butyl being more preferred, in terms of color tone stability, long-term thermal stability, and hydrolysis resistance.

Examples of the C1-40 alkyl group as R³¹ and R³² in formula (3) include methyl, ethyl, propyl, isopropyl, cyclopropyl, butyl, sec-butyl, tert-butyl, isobutyl, pentyl, isopentyl, tert-pentyl, cyclopentyl, 4-ethyl-2-methylheptyl, hexyl, 2-methylhexyl, 3-methylhexyl, cyclohexyl, 4-methylcyclohexyl, 2,4-dimethylhexyl, 1,2,4-trimethylcyclohexyl, heptyl, 2-heptyl, 3-heptyl, isoheptyl, tert-heptyl, 1-octyl, isooctyl, tert-octyl, 2-ethylhexyl, nonyl, isononyl, decyl, isodecyl, undecyl, dodecyl, tridecyl, isotridecyl, tetradecyl, pentadecyl, hexadecyl, heptadecyl, octadecyl, icosyl, adamantyl, and norbornyl.

Examples of the C6-40 aryl group as R³¹ and R³² in formula (3) include phenyl, naphthyl, anthracenyl, phenanthryl, fluorenyl, indenyl, 2-methylphenyl, 3-methylphenyl, 4-methylphenyl, 4-vinylphenyl, 3-isopropylphenyl, 4-isopropylphenyl, 4-butylphenyl, 4-isobutylphenyl, 4-tert-butylphenyl, 4-hexylphenyl, 4-cyclohexylphenyl, 4-octylphenyl, 4-(2-ethylhexyl)phenyl, 4-stearylphenyl, 2,3-dimethylphenyl, 2,4-dimethylphenyl, 2,5-dimethylphenyl, 2,6-dimethylphenyl, 3,4-dimethylphenyl, 3,5-dimethylphenyl, 2,4-di-tert-butylphenyl, 2,5-di-tert-butylphenyl, 2,6-di-tert-butylphenyl, 2,4-di-tert-pentylphenyl, 2,5-di-tert-amylphenyl, 2,5-di-tert-octylphenyl, 2,4-dicumylphenyl, 4-cyclohexylphenyl, 1,1'-biphenyl-4-yl, 2,4,5-trimethylphenyl, 2,6-di-tert-butyl-4-methylphenyl, and ferrocenyl. The aryl group as R³¹ and R³² is preferably a C6-30 aryl group, more preferably a C10-24 aryl group, with 2,4-di-tert-butylphenyl, 2,4-dicumylphenyl, and 2,6-di-tert-butyl-4-methylphenyl being even more preferred.

In terms of compatibility with the thermoplastic resin, resistance to volatilization during FDM additive manufacturing, and antifogging properties of the resulting 3D object, the group represented by R³¹ and R³² is preferably an alkyl group, more preferably a C1-30 alkyl group, even more preferably a C8-22 alkyl group, most preferably octadecyl.

The C1-4 alkyl group as R⁴¹, R⁴², and R⁴³ in formula (4) includes those with 1 to 4 carbon atoms among the examples of the C1-8 alkyl groups recited above as R²¹ and R²² in formula (2). R⁴¹ and R⁴² are each preferably a C3 or C4 alkyl group, more preferably tert-butyl, in terms of color tone stability, long-term thermal stability, and resistance to hydrolysis. R⁴³ is preferably hydrogen, methyl, or ethyl, more preferably hydrogen, in terms of ease of preparation and thermal stability of the compound.

The C1-18 alkyl group as R⁴⁴ in formula (4) includes those with 1-18 carbons among the examples of the alkyl groups with 1-40 carbons represented by R³¹ and R³² in formula (3). R⁴⁴ is preferably a C4-12 alkyl group, more preferably a C6-10 alkyl group, in terms of compatibility with the thermoplastic resin, color tone stability, long-term thermal stability, and resistance to hydrolysis.

The C8-22 alkyl groups as R⁵¹ and R⁵² in formula (5) and R⁶¹, R⁶², R⁶³, and R⁶⁴ in formula (6) include those with 8 to 22 carbon atoms among the examples of the C1-40 alkyl groups represented by R³¹ and R³² in formula (3). R⁵¹ and R⁵² are each preferably a C12-18 alkyl group in terms of compatibility with the thermoplastic resin, resistance to volatilization during FDM additive manufacturing, and antifogging properties of the resulting 3D object. R⁶¹ through R⁶⁴ are each preferably a C10-15 alkyl group, more preferably a C12-13 alkyl group.

The secondary antioxidants (C) may include one or more antioxidants.

The secondary antioxidant (C) is used in an amount of 0.01 to 1.4 parts, preferably 0.03 to 1.2 parts, more preferably 0.05 to 1 part, by mass per 100 parts by mass of the thermoplastic resin (A). A quantity of 0.01 parts or more of the secondary antioxidant (C) allows for substantial improvement in color tone stability and long-term thermal stability. By limiting the secondary antioxidant (C) to a maximum of 1.4 parts, it is possible to mitigate the issues, such as poor molding, defects in the appearance of 3D objects, and blooming.

In order to obtain the full effects of the present invention, the mass ratio of the primary antioxidant (B) to the secondary antioxidant (C) in the thermoplastic resin composition of the present invention is preferably in the range of from 99/1 to 25/75, more preferably from 90/10 to 30/70.

The thermoplastic resin composition of the present invention preferably has a continuous filament form. The composition in filament form is suitable as a filament material for use in commercially available FDM additive manufacturing devices. The filament material may also be referred to as "filament".

The thermoplastic resin composition of the present invention in continuous filament form preferably has an average diameter of 1.55 to 1.95 mm, more preferably 1.65 to 1.85 mm, even more preferably 1.70 to 1.80 mm. Filament materials with an average diameter falling within the above range are suited for use on commercially available FDM additive manufacturing devices.

The average diameter of the filament can be measured physically by using a digital caliper or by using the reflection of an infrared laser. When using a digital caliper, diameter measurement should be taken at 20 or more points to obtain an average. The measuring points are preferably spaced at least 100 mm apart in the filament length direction. The filament can have a circular or elliptic cross-section. When the cross-sectional shape is not circular, the term "diameter" refers to the length of the longest line segment crossing the cross-section.

The thermoplastic resin composition of the present invention in filament form is produced by molding a resin material prepared by mixing components (A), (B), and (C) into a filament feedstock by a known method. The resin material may contain the above-described optional additives according to necessity. The additive may previously be added to the thermoplastic resin (A) or may be added to a system where components (A) to (C) are being mixed together or to the mixture of components (A) to (C). The description above about the preferred compounds as components (A) to (C) and their amounts as well as the description below about other optional components and their preferred amounts equally apply to the resin material as prepared from components (A) to (C).

The mixing method for preparing the resin material is not particularly restricted and any known techniques can be utilized. For example, the components are mixed using a mixing machine, such as a tumbler mixer, a Henschel mixer, a ribbon blender, a V-type mixer, a W-type mixer, Supermixer, and a Nauta mixer, or melt-mixed in an extruder, or dissolved in a solvent to be solvent-cast.

The method for producing the filamentous thermoplastic resin composition is not particularly restricted, and any known techniques can be used. For example, the thermoplastic resin composition is extrusion molded using an extruder, water- or air-cooled, and wound up on a winder. The filamentous thermoplastic resin composition may or may not be drawn.

The average diameter of the filamentous thermoplastic resin composition can be adjusted by appropriately selecting the feed rate of the resin material to an extruder, the number of revolutions of the extruder screw, the diameter of the extruder die, the winding speed of the winder, and so on.

Where needed, the resin composition of the present invention may contain resin additives, such as phenol antioxidants other than component (B), phosphorus antioxidants other than component (C), thioether antioxidants other than component (C), ultraviolet absorbers, and hindered amine light stabilizers, within ranges that do not ruin the effects of the present invention.

Examples of useful phenol antioxidants other than component (B) include 2,6-di-t-butyl-p-cresol, 2,6-diphenyl-4-octadecyloxyphenol, distearyl (3,5-di-t-butyl-4-hydroxybenzyl)phosphonate, 1,6-hexamethylenebis[(3,5-di-t-butyl-4-hydroxyphenyl)propionamide], 2,2'-methylenebis(4-methyl-6-t-butylphenol), 2,2'-methylenebis(4-ethyl-6-t-butylphenol), 2,2'-ethylidenebis(4,6-di-t-butylphenol), 2,2'-ethylidenebis(4-s-butyl-6-t-butylphenol), 1,3,5-tris(2,6-dimethyl-3-hydroxy-4-t-butylbenzyl) isocyanurate, 1,3,5-tris(3,5-di-t-butyl-4-hydroxybenzyl) isocyanurate, 1,3,5-tris(3,5-di-t-butyl-4-hydroxybenzyl)-2,4,6-trimethylbenzene, 2-t-butyl-4-methyl-6-(2-acryloyloxy-3-t-butyl-5-methylbenzyl)phenol, stearyl (3,5-di-t-butyl-4-hydroxyphenyl)propionate, pentaerythritol tetrakis[3-(3,5-di-t-butyl-4-hydroxyphenyl)propionate], thiodiethylene glycol bis [(3,5-di-t-butyl-4-hydroxyphenyl)propionate], 1,6-hexamethylenebis [(3,5-di-t-butyl-4-hydroxyphenyl)propionate], bis[3,3-bis(4-hydroxy-3-t-butylphenyl)butyric acid] glycol ester, bis[2-t-butyl-4-methyl-6-(2-hydroxy-3-t-butyl-5-methylbenzyl)phenyl] terephthalate, and 1,3,5-tris[(3,5-di-t-butyl-4-hydroxyphenyl)propionyloxyethyl] isocyanurate. The amount of the phenol antioxidant, if used in addition to component (B), is preferably within 0.001 to 10 parts, more preferably 0.05 to 5 parts, by mass per 100 parts by mass of the thermoplastic resin (A).

Examples of useful phosphorus antioxidants other than component (C) include tris(nonylphenyl) phosphite, tris(2-t-butyl-4-(3-t-butyl-4-hydroxy-5-methylphenylthio)-5-methylphenyl) phosphite, tridecyl phosphite, octyl diphenyl phosphite, didecyl monophenyl phosphite, tetrakis(tridecyl)isopropylidenediphenol diphosphite, tetrakis(tridecyl)-4,4'-n-butylidenebis(2-t-butyl-5-methylphenol) diphosphite, hexakis(tridecyl)-1,1,3-tris(2-methyl-4-hydroxy-5-t-butylphenyl)butane triphosphite, tetrakis(2,4-di-tert-butylphenyl)biphenylene diphosphonite, 9,10-dihydro-9-oxa-10-phosphaphenanthrene 10-oxide, 2,2'-ethylenebis(4,6-di-tert-butylphenyl) fluorophosphite, tris(2-[(2,4,8,10-tetrakis-t-butyldibenzo[d,f][1,3,2]dioxaphosphepin-6-yl)oxy]ethyl)amine, and phosphite of 2-ethyl-2-butylpropylene glycol and 2,4,6-tri-t-butylphenol. The amount of the phosphorus antioxidant, if used in addition to component (C), is preferably within 0.001 to 10 parts, more preferably 0.05 to 5 parts, by mass per 100 parts by mass of the thermoplastic resin (A). The amount of the phosphorus antioxidant other than component (C) is preferably not more than 100 parts by mass per 100 parts by mass of component (C).

Examples of useful thioether antioxidants other than component (C) include dialkyl thiodipropionates other than component (C) and pentaerythritol tetrakis(β-alkylmercaptopropionates) other than component (C). The amount of such a thioether antioxidant, if used in addition to component (C), is preferably within 0.001 to 10 parts, more preferably 0.05 to 5 parts, by mass per 100 parts by mass of the thermoplastic resin (A) and is preferably not more than 100 parts by mass per 100 parts by mass of component (C).

Examples of the ultraviolet absorber include 2-hydroxybenzophenones, such as 2,4-dihydroxybenzophenone, 2-hydroxy-4-methoxybenzophenone, 2-hydroxy-4-octoxybenzophenone, and 5,5' -methylenebis(2-hydroxy-4-methoxybenzophenone); 2-(2'-hydroxyphenyl)benzotriazoles, such as 2-(2' -hydroxy-5' -methylphenyl)benzotriazole, 2-(2'-hydroxy-3',5'-di-t-butylphenyl)-5-chlorobenzotriazole, 2-(2'-hydroxy-3'-t-butyl-5'-methylphenyl)-5-chlorobenzotriazole, 2-(2' -hydroxy-5' -t-octylphenyl)benzotriazole, 2-(2'-hydroxy-3',5'-dicumylphenyl)benzotriazole, 2,2'-methylenebis(4-t-octyl-6-(benzotriazolyl)phenol), and 2-(2'-hydroxy-3'-t-butyl-5'-carboxyphenyl)benzotriazole; benzoates, such as phenyl salicylate, resorcinol monobenzoate, 2,4-di-t-butylphenyl 3,5-di-t-butyl-4-hydroxybenzoate, 2,4-di-t-amylphenyl 3,5-di-t-butyl-4-hydroxybenzoate, and hexadecyl 3,5-di-t-butyl-4-hydroxybenzoate; substituted oxanilides, such as 2-ethyl-2'-ethoxyoxanilide and 2-ethoxy-4'-dodecyloxanilide; cyanoacrylates, such as ethyl α-cyano-β,β-diphenylacrylate and methyl 2-cyano-3-methyl-3-(p-methoxyphenyl)acrylate; and triaryltriazines, such as 2-(2-hydroxy-4-octoxyphenyl)-4,6-bis(2,4-di-t-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-t-butylphenyl)-s-triazine. The amount of the ultraviolet absorber, if used, is preferably 0.001 to 30 parts, more preferably 0.01 to 10 parts, by mass per 100 parts by mass of the thermoplastic resin.

Examples of the hindered amine light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl) bis(tridecyl)-1,2,3,4-butanetetracarboxylate, bis(1,2,2,6,6-pentamethyl-4-piperidyl) bis(tridecyl) -1,2,3,4-butanetetracarboxylate, bis(1,2,2,6,6-pentamethyl-4-piperidyl)-2-butyl-2-(3,5-di-t-butyl-4-hydroxybenzyl) malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazin e polycondensate, 1,6-bis(2,2,6,6-tetramethyl-4-piperidylamino)hexane/2,4-dichloro-6-t-octylamino-s-triazi ne polycondensate, 1,5,8,12-tetrakis[2,4-bis(N-butyl-N-(2,2,6,6-tetramethyl-4-piperidyl)amino)-s-triazin-6-yl ]-1,5, 8,12-tetraazadodecane, 1,5,8,12-tetrakis[2,4-bis(N-butyl-N-(1,2,2,6,6-pentamethyl-4-piperidyl)amino)-s-triazin-6 -yl]-1,5,8,12-tetraazadodecane, 1,6,11-tris[2,4-bis(N-butyl-N-(2,2,6,6-tetramethyl-4-piperidyl)amino)-s-triazin-6-yl]amin oundecane, 1,6,11-tris[2,4-bis(N-butyl-N-(1,2,2,6,6-pentamethyl-4-piperidyl)amino)-s-triazin-6-yl]a minoundecane, bis(2,2,6,6-tetramethyl-1-octyloxy-4-piperidyl) decanedionate, bis(2,2,6,6-tetramethyl-1-undecyloxypiperidin-4-yl) carbonate, and TINUVIN NOR 371 available from BASF. The amount of the hindered amine light stabilizer, if used, is preferably 0.001 to 30 parts, more preferably 0.01 to 10 parts, by mass per 100 parts by mass of the thermoplastic resin.

The resin composition of the present invention may optionally contain a filler within a range that does not impair the effects of the present invention.

Useful fillers include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, silica, alumina, potassium titanate whisker, wollastonite, fibrous magnesium oxysulfate, and hydrotalcite. The fillers are used with particle size (or diameter, length, and aspect ratio in the case of fibrous fillers) selected as appropriate. The fillers may be used either individually or in combination thereof. The filler may have been surface treated if necessary. The amount of the filler, if used, is preferably in the range of from 1 to 100 parts, more preferably 3 to 80 parts, and even more preferably 5 to 50 parts by mass per 100 parts by mass of the thermoplastic resin.

If desired, the resin composition of the present invention may further contain additives commonly added to synthetic resins, including crosslinking agents, antistatics, antifog additives, anti-plate-out additives, surface treating agents, plasticizers, lubricants, reinforcing materials, flame retardants, fluorescent agents, antifungals, microbicides, foaming agents, metal deactivators, parting agents, pigments, silicone oils, and silane coupling agents, within ranges that do not impair the effects of the present invention.

The thermoplastic resin composition of the present invention can be used as a filament material in FDM additive manufacturing to create a 3D object of the present invention. The present invention provides a method for producing a 3D object, the method including additive manufacturing a 3D object by FDM using the thermoplastic resin composition as a filament material. The device that can be used to perform FDM additive manufacturing includes FDM additive manufacturing devices, which are generally called 3D printers. Commercially available 3D printers can be utilized.

The 3D object of the present invention is suited for a variety of applications due to its superiority in color tone stability and long-term thermal stability. Specifically, the 3D object of the present invention finds applications in a wide range of industrial fields, encompassing electric & electronics, communications, agriculture, forestry, fisheries, mining, construction, food, fibers, clothing, medical care, coal, petroleum, rubber, leather, automobiles, railroads, aviation, precision equipment, lumber, building materials, civil engineering, furniture, printing, musical instruments, and more. More specifically, it can be used in various office automation equipment, such as printers, personal computers, word processors, keyboards, personal digital assistants, telephone sets, copiers, facsimiles, electric cash registers, calculators, electronic notebooks, cards, holders, and writing tools. Additionally, it has applications in home appliances, such as laundry machines, refrigerators, vacuum cleaners, microwave ovens, lighting equipment, game consoles, clothes irons, and *kotatsu;* audiovisual equipment, including TV sets, VTRs, camcorders, radio-cassette players, tape recorders, mini discs, CD players, speakers, and liquid crystal display; and electrical and electronic components and communication equipment, such as connectors, relays, capacitors, switches, printed circuit boards, coil bobbins, semiconductor sealants, LED sealants, electric wires, cables, transformers, deflection yokes, distribution boards, and clocks.

The 3D object of the present invention also finds use as materials for automobiles, vehicles, railroad cars, boats, ships, aircrafts, buildings, and houses, such as seats (including stuffing and upholstery), belts, ceiling covering, convertible tops, arm rests, door trims, rear package trays, mats, sun visors, wheel covers, mattress covers, air bags, insulating materials, assist grips, assist straps, wire covering, electrical insulators, paints, coatings, overlays, flooring, inside corner moldings, carpets, rugs, wallpaper, wall covering, exterior covering, interior covering, roofing, decks, walls, pillars, floor plates, fences, frames and moldings, profiles for windows and doors, roof shingles, siding boards, terraces, balconies, soundproofing boards, heat insulating boards, and window boards; civil engineering materials; and housewares and sporting equipment, such as clothing, curtains, bed sheets, chip boards, fiber boards, carpets and rugs, doormats, sheets, buckets, hoses, containers, glasses, bags, cases, goggles, skis, rackets, tents, and musical instruments.

### Examples

The present invention will now be illustrated in greater detail with reference to Examples, but it should be understood that the present invention is not limited thereto.

### Examples 1 to 12 and Comparative Examples 1 to 8

### Preparation of thermoplastic resin composition

The components (A) to (C) shown in Table 1 were dry blended, and the blend was melt kneaded in a single-screw extruder D3038 from Toyo Seiki Seisaku-sho, Ltd. at an extrusion temperature of 210°C and a screw speed of 25 rpm to make a filamentous thermoplastic resin composition (hereinafter referred to as a filament). The strand extruded from the extruder was wound up on a filament winder (reel winder from Nippon Placon Co., Ltd.) equipped with a filament diameter measuring device Filameasure from Filabot Inc. while cooling in water so as to produce a filament for FDM additive manufacturing with an average diameter of 1.65 to 1.85 mm. The average diameter of the resulting filamentous thermoplastic resin composition was measured using a digital caliper by the method described above. The filament wound on the reel was dried under reduced pressure at 80°C. In Tables 1 and 2, the amounts of the components are given in parts by mass.

### Making of test pieces for evaluation

The reel with filament wound on it was attached to a 3D printer H+1 from Afinia 3D, and FDM additive manufacturing was performed under the following conditions to obtain multipurpose test pieces (4 mm thick each) compliant with ISO 572.
- Nozzle temperature: 285°C
- Stage temperature: 95°C
- Deposition pitch: 0.2 mm
- Infill percentage: 99% or higher (solid)
- Raster orientation: 0°/90°
- Lamination direction: X-Y (flat)

### Accelerated thermal aging treatment

The test piece was left to stand in a Geer oven at 120°C for 2000 hours and then taken out of the oven. This operation will be referred to as an accelerated thermal aging treatment.

### Evaluation of color tone stability

The coloration of the test piece was assessed. The coloration of a test piece was measured in the L*a*b* color space using a spectrophotometric color measurement system (XRite) and converted to ΔE76. Further, the test piece was subjected to the accelerated thermal aging treatment, and its coloration was measured in the same manner as above. The difference (ΔE) between the measured values of the test piece that did not undergo the accelerated thermal aging treatment and the one that did, a measure for evaluating color tone stability, is shown in Tables 1 and 2. A smaller ΔE value indicates better color tone stability.

### Evaluation of long-term thermal stability

Tensile elongation of the test piece was measured. The tensile elongation was measured at 23°C in accordance with ISO 527. The test piece was subjected to the accelerated thermal aging treatment, and the tensile elongation of the aged test piece was measured again. The ratio of the tensile elongation of the test piece that underwent the accelerated thermal aging to that of the test piece that did not (tensile elongation retention), a measure for evaluating long-term thermal stability, is shown in Tables 1 and 2. The closer the tensile elongation retention is to 100%, the higher the long-term thermal stability.

### Evaluation of bloom resistance

After the test piece was subjected to accelerated thermal aging treatment, the presence or absence of bloom on the surface was visually checked. The presence (yes) or absence (no) of bloom is shown in Tables 1 and 2.

The components in Tables 1 and 2 are as follows.
Component (A):
   - PA12: polyamide 12, UBESTA3024U, from UBE Corp.
Component (B):
   - B-1: 1,1,3-tris(2-methyl-4-hydroxy-5-tert-butylphenyl)butane, a phenol antioxidant having the structure of formula (8)
   - B-2: 4,4'-butylidenebis(6-tert-butyl-m-cresol), a phenol antioxidant having the structure of formula (8)
   - B-3: 3,9-bis[2-{3-(3-tert-butyl-4-hydroxy-5-methylphenyl)propionyloxy}-1,1-dimethyleth yl]-2,4,8,10-tetraoxaspiro[5,5]undecane, a phenol antioxidant having the structure of formula (7)
   - B-4: triethylene glycol bis[(3-tert-butyl-4-hydroxy-5-methylphenyl)propionate], a phenol antioxidant having the structure of formula (7)
Comparative component to component (B):
   - BX-1: 1,3,5-tris(3,5-di-tert-butyl-4-hydroxybenzyl) isocyanurate
   - BX-2: stearyl (3,5-di-tert-butyl-4-hydroxyphenyl)propionate
   - BX-3: pentaerythritol tetrakis[3-(3,5-di-tert-butyl-4-hydroxyphenyl)propionate
   - BX-4: 1,3,5-tris(3,5-di-tert-butyl-4-hydroxybenzyl)-2,4,6-trimethylbenzene
   - BX-5: N,N'-bis{3-(3,5-di-tert-butyl-4-hydroxyphenyl)propionyl}hydrazine Component (C):
   - C-1: tris(2,4-di-tert-butylphenyl) phosphite, a phosphorus antioxidant represented by formula (2)
   - C-2: 2,2'-methylenebis(4,6-di-t-butylphenyl)-2-ethylhexyl phosphite, a phosphorus antioxidant represented by formula (4)
   - C-3: bis(octadecyl) pentaerythritol diphosphite, a phosphorus antioxidant represented by formula (3)
   - C-4: tetrakis[methylene-3-(dodecylthio) propionate]methane, a thioether antioxidant represented by formula (6)
   - C-5: di(lauryl) 3,3'-thiodipropionate, a thioether antioxidant of formula (5) Comparative component to component (C):
   - CX-1: tetrakis(2,4-di-tert-butylphenyl)biphenylene diphosphonite

**Table 1**

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| (A) | PA12 | 99.3 | 99.3 | 99.3 | 99.3 | 99.3 | 99.3 | 98.6 | 99 | 98.7 | 99.3 | 99.3 | 98.6 |
| (B) | B-1 | 0.5 | | | | | | | | | | | |
| | B-2 | | 0.5 | | | | | | | | | | |
| | B-3 | | | 0.5 | 0.5 | 0.5 | 0.5 | 1.2 | 0.5 | 0.5 | 0.5 | | |
| | B-4 | | | | | | | | | | | 0.5 | 1.2 |
| (C) | C-1 | 0.2 | 0.2 | 0.2 | | | | | | | | | |
| | C-2 | | | | 0.2 | | | | | | | | |
| | C-3 | | | | | 0.2 | | | | | | | |
| | C-4 | | | | | | 0.2 | 0.2 | 0.5 | 0.8 | | 0.2 | 0.2 |
| | C-5 | | | | | | | | | | 0.2 | | |
| ΔE | | 14 | 13 | 13 | 14 | 13 | 12 | 11 | 10 | 9 | 12 | 13 | 11 |
| Tensile Elongation Retention (%) | | 98 | 97 | 99 | 99 | 98 | 98 | 99 | 98 | 98 | 98 | 97 | 98 |
| Bloom | | no | no | no | No | no | no | no | no | no | no | no | no |

**Table 2**

| | | Compara. Example 1 | Compara. Example 2 | Compara. Example 3 | Compara. Example 4 | Compara. Example 5 | Compara. Example 6 | Compara. Example 7 | Compara. Example 8 |
|---|---|---|---|---|---|---|---|---|---|
| (A) | PA12 | 100 | 99.3 | 99.3 | 99.3 | 99.3 | 99.3 | 99.5 | 98 |
| (B) | B-3 | | | | | | | 0.5 | 0.5 |
| Compara. Component to (B) | BX-1 | | 0.5 | | | | | | |
| | BX-2 | | | 0.5 | | | | | |
| | BX-3 | | | | 0.5 | | | | |
| | BX-4 | | | | | 0.5 | | | |
| | BX-5 | | | | | | 0.5 | | |
| (C) | C-1 | | 0.2 | 0.2 | 0.2 | 0.2 | 0.2 | | |
| | C-4 | | | | | | | | 1.5 |
| Compara. Component to (C) | CX-1 | | | | | | | 0.2 | |
| ΔE | | 20 | 25 | 18 | 20 | 20 | 26 | 22 | 12 |
| Tensile Elongation Retention (%) | | 11 | 97 | 95 | 95 | 16 | 87 | 97 | 97 |
| Bloom | | no | No | yes | no | yes | no | no | yes |

As shown in Tables 1 and 2, the compositions of the present invention (Examples 1 to 12) showed small changes in color (ΔE) and high retention percentages of tensile elongation before and after accelerated thermal aging.

On the other hand, the compositions not containing the primary antioxidant (B) or the secondary antioxidant (C) of the present invention (Comparative Examples 1 to 7) were inferior to Examples 1 to 12 in color change (ΔE), and many of them were also inferior in tensile elongation retention. The composition of Comparative Example 8, which contained 1.5 parts of the secondary antioxidant (C), showed a small color change but had bloom on its surface.

## Claims

1. A thermoplastic resin composition for additive manufacturing by fused deposition modeling, comprising (A) 100 parts by mass of a thermoplastic resin, (B) 0.01 to 5 parts by mass of a primary antioxidant, and (C) 0.01 to 1.4 parts by mass of a secondary antioxidant,
the thermoplastic resin (A) being a condensation thermoplastic resin,
the primary antioxidant (B) being a phenol antioxidant having at least one structure represented by formula (1): 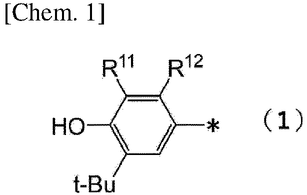 wherein R¹¹ and R¹² each independently represent a hydrogen atom or a methyl group; and * indicates a bond; and
the secondary antioxidant (C) being at least one of a phosphorus antioxidant represented by formula (2), (3), or (4): 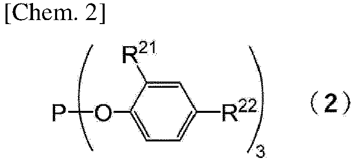
wherein R²¹ and R²² each independently represent an alkyl group with 1 to 8 carbon atoms; 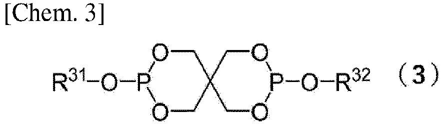
wherein R³¹ and R³² each independently represent an alkyl group with 1 to 40 carbon atoms or an aryl group with 6 to 40 carbon atoms; 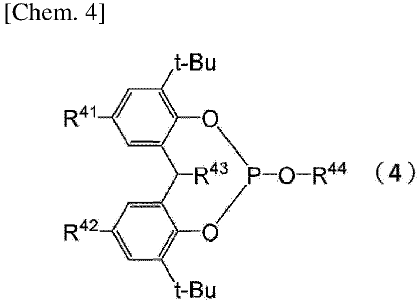
wherein R⁴¹, R⁴², and R⁴³ each independently represent a hydrogen atom or an alkyl group with 1 to 4 carbon atoms; and R⁴⁴ represents an alkyl group with 1 to 18 carbon atoms;
and a thioether antioxidant represented by formula (5) or (6): 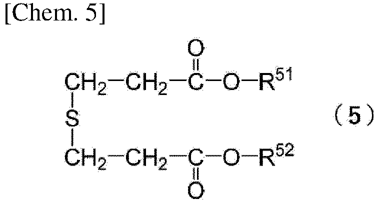
wherein R⁵¹ and R⁵² each independently represent an alkyl group with 8 to 22 carbon atoms; 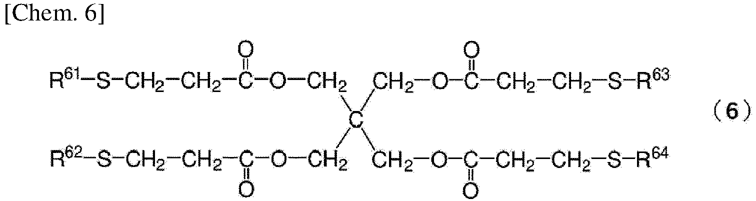
wherein R⁶¹, R⁶², R⁶³, and R⁶⁴ each independently represent an alkyl group with 8 to 22 carbon atoms.

2. The thermoplastic resin composition according to claim 1, having a continuous filament form.

3. The thermoplastic resin composition according to claim 2, having an average diameter of 1.55 to 1.95 mm.

4. The thermoplastic resin composition according to any one of claims 1 to 3, wherein the thermoplastic resin (A) is a polyamide resin.

5. The thermoplastic resin composition according to any one of claims 1 to 3, wherein the thermoplastic resin (A) is at least one of polyamide 6, polyamide 66, polyamide 11, and polyamide 12.

6. The thermoplastic resin composition according to any one of claims 1 to 5, wherein component (B) is a phenol antioxidant having at least one structure represented by formula (7): 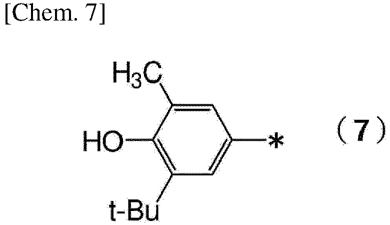 wherein * indicates a bond.

7. The thermoplastic resin composition according to any one of claims 1 to 5, wherein the primary antioxidant (B) is a phenol antioxidant having at least one structure represented by formula (8): 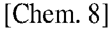 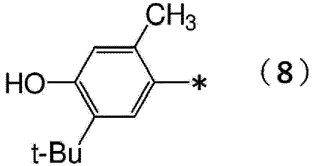 wherein * indicates a bond.

8. The thermoplastic resin composition according to any one of claims 1 to 5, wherein R³¹ and R³² in formula (3) each independently represent an alkyl group with 1 to 40 carbon atoms.

9. A method for producing a three-dimensional (3D) object comprising additive manufacturing a 3D object by fused deposition modeling using the thermoplastic resin composition according to any one of claims 1 to 8.

10. A 3D object produced by the method according to claim 9.

11. Use of a resin material in the production of a filament material for additive manufacturing by fused deposition modeling,
the resin material comprising:
(A) 100 parts by mass of a thermoplastic resin,
(B) 0.01 to 5 parts by mass of a primary antioxidant, and
(C) 0.01 to 1.4 parts by mass of a secondary antioxidant,
the thermoplastic resin (A) being a condensation thermoplastic resin,
the primary antioxidant (B) being a phenol antioxidant having at least one structure represented by formula (1): 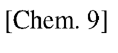 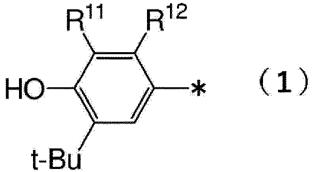 wherein R¹¹ and R¹² each independently represent a hydrogen atom or a methyl group; and * indicates a bond;
the secondary antioxidant (C) being at least one of a phosphorus antioxidant represented by formula (2), (3), or (4): 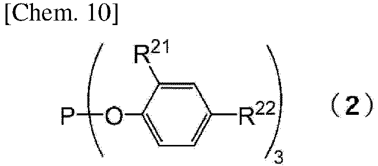
wherein R²¹ and R²² each independently represent an alkyl group with 1 to 8 carbon atoms; 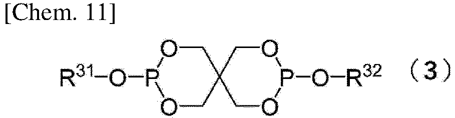
wherein R³¹ and R³² each independently represent an alkyl group with 1 to 40 carbon atoms or an aryl group with 6 to 40 carbon atoms; 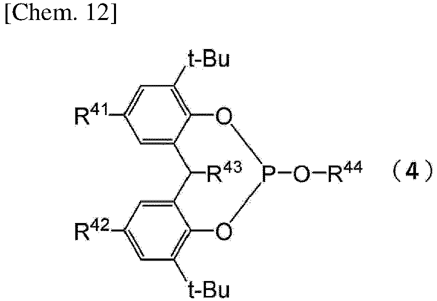
wherein R⁴¹, R⁴², and R⁴³ each independently represent a hydrogen atom or an alkyl group with 1 to 4 carbon atoms; and R⁴⁴ represents an alkyl group with 1 to 18 carbon atoms;
and a thioether antioxidant represented by formula (5) or (6): 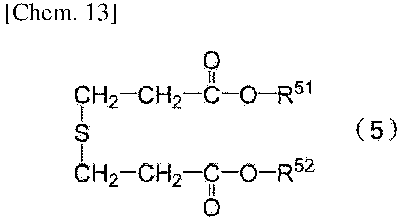
wherein R⁵¹ and R⁵² each independently represent an alkyl group with 8 to 22 carbon atoms; 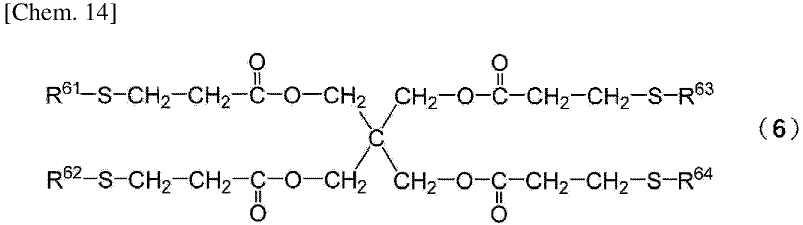
wherein R⁶¹, R⁶², R⁶³, and R⁶⁴ each independently represent an alkyl group with 8 to 22 carbon atoms.
